# EUROPEAN PATENT APPLICATION

(11) **EP 4 517 534 A1**
(43) Date of publication of application: **05.03.2025**
(21) Application number: 24190304.6
(22) Date of filing: 23.07.2024
(51) Int. Cl.: G06F 11/30, G06F 11/34, H04L 69/22

(54) **LOG PROCESSING METHOD AND APPARATUS, ELECTRONIC DEVICE, AND STORAGE MEDIUM**

(30) Priority: 28.08.2023 CN 202311094394
(71) Applicant: Beijing Volcano Engine Technology Co., Ltd., Beijing 100190 (CN)
(72) Inventor: CAI, Shu, Beijing, 100028 (CN)
(74) Representative: Dentons UK and Middle East LLP

(57) **Abstract**

The present disclosure provides a log processing method and apparatus, an electronic device, and a storage medium. The method includes: receiving a target log sent from a client, the target log being obtained by encoding a raw log with a preset field type through the client based on a preset log transfer protocol, a log structure of the target log including a header region and a content region, the header region including a routing field region used for storing storage attribute information of the target log, and the content region being used for storing a log content; and decoding, based on the preset log transfer protocol, the routing field region to obtain the storage attribute information of the target log, determining, based on the storage attribute information of the target log, a storage address of the target log, and storing the target log into the storage address.

## Description

### CROSS-REFERENCE TO RELATED APPLICATION

This application claims the priority to and benefits of the Chinese patent application No. 202311094394.7, which was filed on August 28, 2023. All the aforementioned patent applications are hereby incorporated by reference in their entireties.

### TECHNICAL FIELD

The present disclosure relates to a log processing method and apparatus, an electronic device, and a storage medium.

### BACKGROUND

A log is a record that records events, activities, or states in an application or system. The log is a common tool used by developers and system administrators for troubleshooting, monitoring, and performance analysis, and the troubleshooting can be speeded up and the performance optimization can be performed through logging and analysis strategies.

In some cases, a ProtoBuffer (PB) transfer protocol is usually used for encoding the log and store the encoded log to a server. However, in this way, during the transmission process, the server needs to decode the entire content of the encoded log to obtain a storage address and store the encoded log to the corresponding storage address. Due to the large amount of data in the log, resulting in a large amount of overhead occupied in the process of obtaining the storage address.

### SUMMARY

Embodiments of the present disclosure provide at least a log processing method and apparatus, an electronic device, and a storage medium, which may reduce the overhead occupied in the process of obtaining a storage address of a target log by a server.

An embodiment of the present disclosure provides a log processing method, which includes:
receiving a target log sent from a client, the target log being obtained by encoding a raw log with a preset field type through the client based on a preset log transfer protocol, a log structure of the target log comprising a header region and a content region, the header region comprising a routing field region, the routing field region being used for storing storage attribute information of the target log, and the content region being used for storing a log content; and
decoding, based on the preset log transfer protocol, the routing field region to obtain the storage attribute information of the target log, determining, based on the storage attribute information of the target log, a storage address of the target log, and storing the target log into the storage address.

In a possible implementation, the determining, based on the storage attribute information of the target log, a storage address of the target log, includes:
searching, based on the storage attribute information of the target log, a target storage address corresponding to the storage attribute information of the target log from a pre-constructed corresponding relationship between storage attribute information and storage address, and determining the target storage address as the storage address of the target log, the target log being a log generated when a target microservice run by the client is invoked, and the storage attribute information comprising at least one selected from a group comprising a name of a microservice, a host name corresponding to the microservice, and a host network address corresponding to the microservice.

In a possible implementation, the header region further comprises an index field region, the index field region comprises a plurality of index fields; the target log comprises a plurality of sub-logs, and each sub-log of the plurality of sub-logs corresponds to at least one index field of the plurality of index fields; and the method further comprises:
determining, for each sub-log of the plurality of sub-logs, log attribute information of the sub-log, and storing the log attribute information of the sub-log into a corresponding index field, the log attribute information being used for querying a corresponding sub-log.

In a possible implementation, after the determining, based on the storage attribute information of the target log, a storage address of the target log, and storing the target log into the storage address, the method further comprises:
receiving a log query request sent from the client, the log query request carrying log information to be queried; and
searching, based on the log information to be queried, a target log content corresponding to the log information to be queried, and sending the target log content to the client.

In a possible implementation, the log information to be queried comprises log attribute information to be queried or log content information to be queried; the header region further comprises an index field region, the index field region comprises a plurality of index fields, and the plurality of index fields are used for storing log attribute information; and the searching, based on the log information to be queried, a target log content corresponding to the log information to be queried, comprises:
searching, based on the log attribute information to be queried, target log attribute information matched with the log attribute information to be queried, from the index field region, and searching, based on the target log attribute information, the target log content associated with the target log attribute information from a region corresponding to the storage address; or
searching, based on the log content information to be queried, the target log content matched with the log content information to be queried from a region corresponding to the storage address.

In a possible implementation, the target log comprises a plurality of sub-logs; and the searching, based on the log content information to be queried, the target log content matched with the log content information to be queried from a region corresponding to the storage address, comprises:
decoding the target log to obtain a plurality of raw sub-logs respectively corresponding to the plurality of sub-logs, each raw sub-log of the plurality of raw sub-logs comprising a plurality of log contents;
determining, for each log content of the plurality of log contents of each raw sub-log, a pointer of each log content in a memory; and
determining, based on the log content corresponding to each pointer, a target pointer matched with the log content information to be queried, and searching the target log content from a storage address indicated by the target pointer.

In a possible implementation, the log structure of the target log further comprises a protocol header, the protocol header is used for storing protocol information, and the protocol information comprises at least one selected from a group comprising a version number of the preset log transfer protocol, a log compression algorithm type, a log length, and protocol verification information, the version number of the preset log transfer protocol is used for characterizing a version of a log transfer protocol that is used for generating the target log; the log compression algorithm type refers to a compression algorithm for compressing the raw log; the log length is used for indicating a maximum amount of data of a log to be encoded; and the protocol verification information is used for verifying whether there is an error in the target log relative to the raw log.

An embodiment of the present disclosure provides a log processing method, which includes:
obtaining a raw log, and encoding, based on a preset log transfer protocol, the raw log to obtain a target log; a log structure of the target log comprising a header region and a content region, the header region comprising a routing field region, the routing field region being used for storing storage attribute information of the target log, and the content region being used for storing a log content; and
sending the target log to a server to cause the server to determine a storage address of the target log based on the storage attribute information in the routing field region, and storing the target log into the storage address.

In a possible implementation, the raw log comprises a plurality of raw sub-logs, each raw sub-log comprises a plurality of key-value pairs, and each key-value pair comprises a keyword and a key-value; and the encoding, based on a preset log transfer protocol, the raw log to obtain a target log, comprises:
determining, for the plurality of raw sub-logs, at least one identical raw keyword present in the plurality of raw sub-logs; and
for each identical raw keyword, replacing the raw keyword with a target keyword to obtain a plurality of new raw sub-logs, and encoding the plurality of new raw sub-logs, a byte length of the target keyword being less than a byte length of the raw keyword.

In a possible implementation, the method further includes:
generating a log query request in response to a query operation, the log query request carrying log information to be queried;
sending the log query request to the server, the log query request being used for searching a target log content corresponding to the log information to be queried; and
receiving the target log content, corresponding to the log information to be queried, sent from the server.

An embodiment of the present disclosure further provides a log processing apparatus, including:
a log receiving module, configured to receive a target log sent from a client, where the target log is obtained by encoding a raw log with a preset field type through the client based on a preset log transfer protocol, a log structure of the target log includes a header region and a content region, the header region includes a routing field region, the routing field region is used for storing storage attribute information of the target log, and the content region is used for storing a log content; and
a log storage module, configured to decode, based on the preset log transfer protocol, the routing field region to obtain the storage attribute information of the target log, determine, based on the storage attribute information of the target log, a storage address of the target log, and store the target log into the storage address.

In a possible implementation, the log storage module is specifically configured to:
search, based on the storage attribute information of the target log, a target storage address corresponding to the storage attribute information of the target log from a pre-constructed corresponding relationship between storage attribute information and storage address, and determine the target storage address as the storage address of the target log, where the target log is a log generated when a target microservice run by the client is invoked, and the storage attribute information includes at least one selected from a group comprising a name of a microservice, a host name corresponding to the microservice, and a host network address corresponding to the microservice.

In a possible implementation, the header region further includes an index field region, the index field region includes a plurality of index fields; the target log includes a plurality of sub-logs, each of the plurality of sub-logs corresponds to at least one index field of the plurality of index fields; and the log storage module is further configured to:

determine, for each sub-log of the plurality of sub-logs, log attribute information of the sub-log, and store the log attribute information of the sub-log into a corresponding index field, the log attribute information being used for querying a corresponding sub-log.

In a possible implementation, the apparatus further includes a request receiving module, and the request receiving module is configured to:
receive a log query request sent from the client, the log query request carrying log information to be queried; and
search, based on the log information to be queried, a target log content corresponding to the log information to be queried, and send the target log content to the client.

In a possible implementation, the log information to be queried includes log attribute information to be queried or log content information to be queried; the header region further includes an index field region, the index field region includes a plurality of index fields, and the plurality of index fields are used for storing the log attribute information; the request receiving module is specifically configured to:
search, based on the log attribute information to be queried, target log attribute information matched with the log attribute information to be queried, from the index field region, and search, based on the target log attribute information, the target log content associated with the target log attribute information from a region corresponding to the storage address; or
search, based on the log content information to be queried, the target log content matched with the log content information to be queried from a region corresponding to the storage address.

In a possible implementation, the request receiving module is specifically configured to:
decode the target log to obtain a plurality of raw sub-logs respectively corresponding to the plurality of sub-logs, each raw sub-log including a plurality of log contents;
determine, for each log content of the plurality of log contents of each raw sub-log, a pointer of each log content in a memory; and
determine, based on the log content corresponding to each pointer, a target pointer matched with the log content information to be queried, and search the target log content from a storage address indicated by the target pointer.

In a possible implementation, the log structure of the target log further includes a protocol header, the protocol header is used for storing protocol information, and the protocol information includes at least one selected from a group comprising a version number of the preset log transfer protocol, a log compression algorithm type, a log length, and protocol verification information. The version number of the preset log transfer protocol is used for indicating a version of a log transfer protocol that is used for generating the target log; the log compression algorithm type refers to a compression algorithm used for compressing the raw log; the log length is used for indicating a maximum amount of data of a log to be encoded; and the protocol verification information is used for verifying whether there is an error in the target log relative to the raw log.

An embodiment of the present disclosure further provides another log processing apparatus, including:
a log obtaining module, configured to obtain a raw log, and encode, based on a preset log transfer protocol, the raw log to obtain a target log; a log structure of the target log including a header region and a content region, the header region including a routing field region, the routing field region being used for storing storage attribute information of the target log, and the content region being used for storing a log content; and
a log sending module, configured to send the target log to a server to cause the server to determine a storage address of the target log based on the storage attribute information in the routing field region, and store the target log into the storage address.

In a possible implementation, the raw log includes a plurality of raw sub-logs, each raw sub-log includes a plurality of key-value pairs, each key-value pair includes a keyword and a key-value; and the log obtaining module is specifically configured to:
determine, for the plurality of raw sub-logs, at least one identical raw keyword present in the plurality of raw sub-logs; and
for each identical raw keyword, replace the raw keyword with a target keyword to obtain a plurality of new raw sub-logs, and encode the plurality of new raw sub-logs, a byte length of the target keyword being less than a byte length of the raw keyword.

In a possible implementation, the apparatus further includes a request sending module, and the request sending module is specifically configured to:
generate a log query request in response to a query operation; the log query request carrying log information to be queried;
send the log query request to the server, the log query request being used for searching a target log content corresponding to the log information to be queried; and
receive the target log content, corresponding to the log information to be queried, sent from the server.

An embodiment of the present disclosure provides an electronic device, including a processor, a memory, and a bus. The memory stores machine-readable instructions executable by the processor. When the electronic device runs, the processor is in communication with the memory via the bus. When the machine-readable instructions are executed by the processor, the log processing method described in any one of the above embodiments is performed.

An embodiment of the present disclosure provides a non-transitory computer-readable storage medium, the non-transitory computer-readable storage medium stores a computer program. When the computer program is run by a processor, the log processing method described in any one of the above embodiments is performed.

In order to make the above objectives, features, and advantages of the present disclosure more obvious and understandable, the following embodiments, in conjunction with the accompanying drawings, are described in detail as follows.

### BRIEF DESCRIPTION OF DRAWINGS

In order to illustrate the technical solutions of the embodiments of the present disclosure more clearly, the accompanying drawings needed to be used in the embodiments will be briefly introduced below, the accompanying drawings herein are incorporated into and constitute a part of this specification, these accompanying drawings illustrate embodiments consistent with the present disclosure and are used in conjunction with the specification to illustrate the technical solutions of the present disclosure. It should be understood that the following drawings show only certain embodiments of the present disclosure, and therefore should not be regarded as limiting the scope of the present disclosure. Apparently, other accompanying drawings can also be derived from these drawings by those ordinarily skilled in the art without creative efforts.
Fig. 1 is a flowchart of a log processing method according to an embodiment of the present disclosure;
Fig. 2 is a schematic diagram of a protocol structure of a log transfer protocol according to an embodiment of the present disclosure.
Fig. 3 is a flowchart of another log processing method according to an embodiment of the present disclosure;
Fig. 4 is a schematic structural diagram of a log processing apparatus according to an embodiment of the present disclosure;
Fig. 5 is a schematic structural diagram of another log processing apparatus according to an embodiment of the present disclosure;
Fig. 6 is a schematic structural diagram of yet another log processing apparatus according to an embodiment of the present disclosure;
Fig. 7 is a schematic structural diagram of still another log processing apparatus according to an embodiment of the present disclosure; and
Fig. 8 is a schematic diagram of an electronic device according to an embodiment of the present disclosure.

### DETAILED DESCRIPTION

In order to make the purposes, technical solutions, and advantages of the embodiments of the present disclosure clearer, the technical solutions in the embodiments of the present disclosure will be clearly and completely described below in conjunction with the accompanying drawings in the embodiments of the present disclosure. Obviously, the described embodiments are only a portion of the embodiments of the present disclosure and not all of the embodiments of the present disclosure. Generally, the components of the embodiments of the present disclosure described and illustrated in the accompanying drawings herein may be arranged and designed in a variety of different configurations. Accordingly, the following detailed description of the embodiments of the present disclosure provided in the accompanying drawings is not intended to limit the scope of the present disclosure for which protection is claimed, but rather represents only selected embodiments of the present disclosure. Based on the embodiments of the present disclosure, all other embodiments obtained by a person skilled in the art without creative efforts fall within the scope of protection of the present disclosure.

It should be noted that similar reference numerals and letters denote similar items in the following accompanying drawings, and therefore, once an item is defined in one drawing, it does not need to be further defined or explained in the subsequent drawings.

The term "and/or" in this specification describes only an association relationship and represents that three kinds of relationships may exist, for example, A and/or B may represent the following three cases: only A exists, both A and B exist, and only B exists. Further, the term "at least one" herein represents any one of a plurality of items or any combination of at least two of the plurality of items, for example, "including at least one of A, B, and C" may represent including any one or more elements selected from the set consisting of A, B, and C.

It can be understood that before using the technical solutions disclosed in each embodiment of the present disclosure, the user should be informed of the type of personal information involved in the present disclosure, the scope of application, the use scenarios, etc., in accordance with the relevant laws and regulations in an appropriate manner and obtain the user's authorization.

A log is a record that records events, activities, or states in an application or system. The log is a common tool used by developers and system administrators for troubleshooting, monitoring, and performance analysis, and the troubleshooting can be speeded up and the performance optimization can be performed through logging and analysis strategies. In order to facilitate the management of logs, the logs are usually transferred to a server for storage. Due to a long transmission link of the log, after logs are generated on a client, the logs will be transferred sequentially through a gateway layer, a consumption layer, and a storage layer on a server, thereby completing the storage of the logs finally.

In some cases, a ProtoBuffer (PB) transfer protocol is usually used for encoding a log and store the encoded log to a server. However, in this way, during the transmission process, it is necessary to decode the entire content of the encoded log in order to obtain a storage address and store the encoded log to the corresponding storage address. Due to the large amount of data in the log, resulting in a high decoding overhead in the process of obtaining the storage address.

On the basis of the above study, an embodiment of the present disclosure provides a log processing method, which includes receiving a target log sent from a client, where the target log is obtained by encoding a raw log with a preset field type through the client based on a preset log transfer protocol, a log structure of the target log comprises a header region and a content region, the header region comprises a routing field region, the routing field region is used for storing storage attribute information of the target log, and the content region is used for storing a log content; and decoding, based on the preset log transfer protocol, the routing field region to obtain the storage attribute information of the target log, determining, based on the storage attribute information of the target log, a storage address of the target log, and storing the target log into the storage address. That is, in the embodiments of the present disclosure, when determining the storage address, only the routing field region needs to be decoded, without having to decode the entire content of the target log, which is conducive to reducing the overhead occupied in the process of obtaining the storage address.

In the embodiments of the present disclosure, because the log structure of the target log obtained by encoding includes the routing field region and the content region, the routing field region is used for storing a storage location of the log, and the content region is used for storing the log content, so that the server, after receiving the target log, may decode the routing field region to determine the storage address corresponding to the target log. Compared with a method of transferring via the PB transfer protocol in the related technologies, the server does not need to decode the entire content of the target log to obtain the storage address of the target log, and accordingly, it is beneficial to reduce the overhead occupied in the process of obtaining the storage address. In addition, because the space occupied by the routing field region is small, the efficiency of obtaining the storage address may also be improved.

In order to facilitate the understanding of the embodiments, the execution subject of the log processing method provided in the embodiments of the present disclosure is first described in detail. The execution subject of the log processing method provided in the embodiments of the present disclosure is a server, and the server may be a stand-alone physical server, a server cluster or a distributed system composed of a plurality of physical servers, or a cloud server providing basic cloud computing services such as a cloud service, a cloud database, a cloud computing, a cloud storage, big data, and an artificial intelligence platform. In other implementations, the log processing method may also be implemented by way of a processor calling computer-readable instructions stored in a memory.

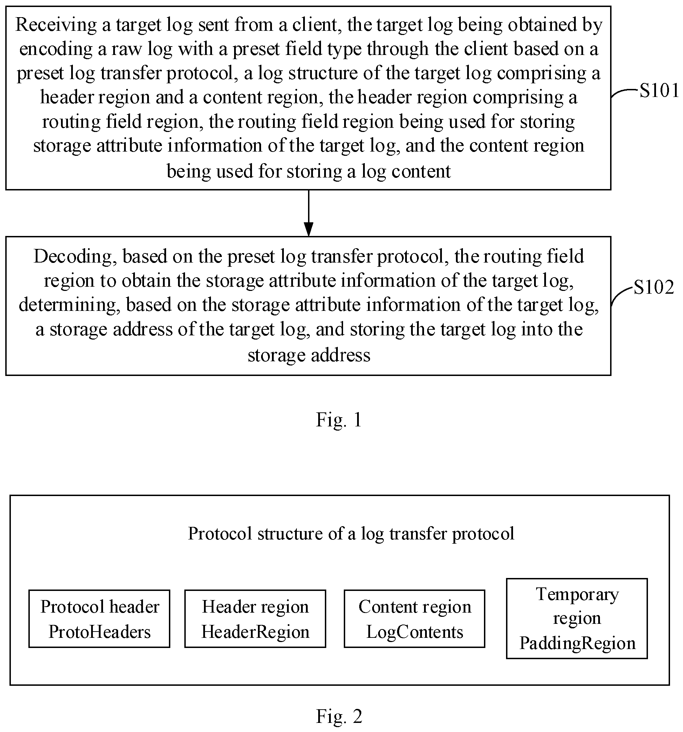

The following describes the log processing method provided in the embodiments of the present disclosure in details with reference to the accompanying drawings. Referring to Fig. 1, a flowchart of a log processing method according to an embodiment of the present disclosure is shown. The log processing method includes steps S101-S102 as follows.

S101: receiving a target log sent from a client, the target log being obtained by encoding a raw log with a preset field type through the client based on a preset log transfer protocol, a log structure of the target log comprising a header region and a content region, the header region comprising a routing field region, the routing field region being used for storing storage attribute information of the target log, and the content region being used for storing a log content.

Here, the client generates the raw log, and encodes and compresses the raw log to obtain the target log, and then sends the target log to the server.

The target log may be a log obtained by encoding and compressing the raw log having the preset field type based on the preset log transfer protocol. The raw log may be a log of a microservice. The log of the microservice refers to a log generated by the invocation of the microservice, and the microservice is a variant of a software development technology service-oriented architecture (SOA) style and divides a single application into many loosely coupled and independently deployable small components or services. Each microservice runs in its own separate process.

Illustratively, the client runs ten microservices, each microservice corresponds to a thousand logs, the thousand logs corresponding to each microservice are encoded to obtain ten target logs, and the client sends the ten target logs in the form of a log stream to the server.

It should be understood that because the raw logs may be generated uninterruptedly, the client will encode and compress a preset number of raw logs to obtain the target log, and accordingly the target log may include a plurality of sub-logs.

The following is a detailed description for the log structure of the target logs, and here, it should be noted that because the target log is obtained by encoding the raw log based on the preset log transfer protocol, the log structure of the target log is similar to the protocol structure of the preset log transfer protocol, and accordingly, the preset log transfer protocol is first described in detail in this implementation.

Fig. 2 is a schematic diagram of a protocol structure of a log transfer protocol according to an embodiment of the present disclosure. As shown in Fig. 2, a protocol structure of a log transfer protocol includes a protocol header (ProtoHeaders), a header region (Header Region), a content region (Log Contents), and a temporary region (Padding Region).

The protocol header (ProtoHeaders) is used for storing protocol information, and the protocol information includes a version number of the log transfer protocol, a log compression algorithm type, a log length, and protocol verification information. Here, it should be understood that the log transfer protocol may have a plurality of versions, and the version numbers of different versions are different from each other, such as version V1, version V2, etc. The versions of the log transfer protocol used by different clients may be different, and accordingly, in order to enable the server to decode the target logs sent from the client, it is necessary to agree on the version number in the log transfer protocol.

In the embodiment of the present disclosure, because the protocol header of the log transfer protocol includes a metadata information part such as the version number of the log transfer protocol, the log compression algorithm type, the log length, and the protocol verification information, so that the client and the server may correctly parse and process the log. The protocol verification information can verify whether the target log is damaged or tampered during the transfer process between the client and the server, and accordingly can ensure the integrity and correctness of the log.

The log compression algorithm type refers to an algorithm used for compressing the raw log. In this implementation, the log compression algorithm may be a ZSTD (Zstandard) compression algorithm, the ZSTD compression algorithm has the advantages of high compression ratio, high performance, adjustable compression rate, and support for streaming compression and decompression; and in other implementations, the log compression algorithm may also be a lossless compression algorithm (e.g., LZ77 or LZ78 compression algorithm), a fast compression algorithm (e.g., Snappy compression algorithm or LZ4 compression algorithm), and the like, which is not limited herein.

The log length refers to the maximum amount of the data of the log that can be encoded by the transfer protocol. It should be understood that because the logs are usually streaming, i.e., the logs are uninterruptedly generated, by setting the log length, it can be avoided that the raw log that needs to be compressed has a relatively large amount of data, which occupies a large amount of bandwidth and compression overhead.

The protocol verification information is used for verifying the entire content of the protocol. Specifically, in the log transfer protocol, the verification information is used for verifying the integrity of data in the transfer process to ensure that the server can detect possible errors or tampering in the transfer process, i.e., it can detect whether there is an error in the target log relative to the raw log. In this implementation, a cyclic redundancy check CRC32 may be used for checking, and in other implementations, other verification methods may be used, such as verifying based on a hash function, which is not limited herein.

The header region (HeaderRegion) includes a dictionary field (Pattern), a routing field region (CommonHeaders), and an index field region (LogHeaders). In this implementation, in order to simplify the header region, the field length of the header region is not greater than 256 Bytes, and in other implementations, the field length of the header region may be other lengths, which is not limited herein.

The dictionary field (Pattern) is used for dictionary conversion of the repeated strings in the protocol. Specifically, some strings have more bytes, and these strings appear more frequently in a log, and therefore, they can be subjected to dictionary conversion, the original string may be replaced with a string with fewer bytes, for example, each raw log has a field of "message", then "message" may be mapped into the number "1"; and for another example, each raw log has a field of "Level", then the field "level" may be converted into the number "2", so that the compression rate of the log may be improved.

The routing field region is used for storing storage attribute information of the log, and the storage attribute information may include at least one selected from a group comprising a name of a microservice (service-name), a host name corresponding to the microservice, and a host network address (ip) corresponding to the microservice.

In the embodiments of the present disclosure, the storage attribute information may be at least one selected from a group comprising the name of the target microservice, the host name corresponding to the target microservice, and the host network address corresponding to the target microservice. The storage address of the target log is determined based on the preset corresponding relationship between the storage attribute information and the storage address, so that the accuracy of determining the storage address of the target log may be improved.

It should be understood that after the client sends the target log to the server, the server needs to store the target log, and accordingly, different target logs may be stored based on the storage attribute information stored in the routing field region; in this way, when storing the target log in the subsequent step, there is no need to decode the entire content of the target log, and only the routing field region needs to be decoded, and accordingly, the decoding efficiency may be improved.

The routing field region may include a plurality of routing fields (also known as public fields), the routing fields are used for storing the storage attribute information of the log, for example, a content of a routing field 1 is "service-name: 1", the routing fields in the routing field region may be pre-configured by the client. For example, it can be configured that client 1 may use the name of the microservice as a routing field, client 2 may use the host name as a routing field, and client 3 may use the name of the microservice and the host name as routing fields.

Here, it should be noted that because microservices run on different hosts in a distributed structure, for example, microservice 1 runs on hosts A, B, and C, and microservice 2 runs on hosts A and B, then service 1 and service 2 have the same host names called A and B. If the host name is used as the routing field, logs corresponding to different microservices may be stored into the same storage address.

The index field region (LogHeaders) includes a plurality of index fields used for storing attribute information of the log (log attribute information). The attribute information may include a time stamp Timestamp, log identification LogID, etc., and in other implementations, the attribute information may further include a log level Log-level, etc., which is not limited herein.

Here, the preset field type includes at least one selected from a group consisting of a string type (String) type, a numeric type (e.g., long, int, and double), and a composite type (e.g., UUID, IPv4, and IPv6). The UUID (Universally Unique Identifier) is a standardized 128-bit identifier for tracking and identifying log records, and has the advantages of high uniqueness and low repetition rate. IPv4 (Internet Protocol version 4) is the fourth version of the Internet Protocol, which is currently the widely used IP address format, and an IPv4 address consists of 32-bit binary number, and is usually expressed in dotted decimal. In a log, the IPv4 address is commonly used for recording information such as network connections, client requests, and server accesses. IPv6 (Internet Protocol version 6) is the sixth version of the Internet Protocol, which is an upgraded version of IPv4. An IPv6 address consists of 128-bit binary number and is usually expressed in hexadecimal numbers separated by colon symbols. The IPv6 address are gradually replacing the IPv4 address as the foundation of the future Internet with its larger address space and better network support. In a log, the IPv6 address may record information about network connections, IP traffic, and network devices. The above preset field type may also be padded or reduced according to the actual needs of the client, which is not limited herein. Because the log transfer protocol also supports at least one of the above field types, such that it can improve the flexibility of the log processing, provide the richness and scalability of the log, adapt to a variety of log processing needs, and provide a more reliable, scalable, and easy-to-understand data transmission and processing mechanism.

The content region (LogContents) is used for storing log contents, the log contents may include contents such as "message" or "stack", "message" is the actual text message or description in a log entry, stack information "stack" records information about the hierarchical relationship and location of function calls, and records the stack trace where an error occurred in the event of the error or an exception. Here, the content region includes a plurality of content fields. Because the log content is usually in the form of key-value pairs, key-value pairs of the log contents may be stored into the content fields. Due to the large amount of data of the log contents, no limitation is made herein for the length of the field in the content region.

The temporary region (PaddingRegion) includes at least one temporary field. In some implementations, the temporary field may be aligned with by zero padding during log storage.

Therefore, based on the above analysis, it can be seen that the target log can be obtained after the raw log is encoded based on the above log transfer protocol, and accordingly, the target log will also include the protocol header, the header region, the content region, and the temporary region. In this way, the target log obtained by encoding based on the above log transfer protocol may include the header region and the content region. The routing field region is used for storing storage attribute information of the target log, and the content region is used for storing the log content of the target log.

S102: decoding, based on the preset log transfer protocol, the routing field region to obtain the storage attribute information of the target log, determining, based on the storage attribute information of the target log, a storage address of the target log, and storing the target log into the storage address.

It should be understood that as described in the foregoing that the routing field region is used for storing storage attribute information of the log, and therefore, the routing field region of the target log stores the storage attribute information of the target log, and the server, after receiving the target log, needs to decode the routing field region based on the preset log transfer protocol due to the fact that the target log is obtained by encoding the raw log based on the preset log transfer protocol. In this way, the storage attribute information of the target log may be obtained, the storage address of the target log may be determined based on the storage attribute information, and the target log may be stored into the storage address, which is conducive to reducing the overhead occupied in the process of obtaining the storage address.

In addition, the space occupied by the routing field region is small, and accordingly the efficiency of obtaining the storage address may also be improved.

It is to be noted that here, the server, when storing the target log, usually receives the target log sent from the client based on a gateway of the server, and then the gateway may obtain the storage attribute information of the target log by performing a fixed-point parsing of the routing fields in the routing field region.

In some implementations, determining the storage address of the target log based on the storage attribute information may include determining the storage address of the target log based on a preset corresponding relationship between the storage attribute information and the storage address, and specifically may include: searching, based on the storage attribute information of the target log, a target storage address corresponding to the storage attribute information of the target log from a pre-constructed corresponding relationship between storage attribute information and storage address, and determining the target storage address as the storage address of the target log.

That is, the client may pre-construct the corresponding relationship between the storage attribute information and the storage address. For example, if the storage attribute information refers to the name of the microservice, a corresponding storage address may be pre-divided for the name of the microservice. For example, the corresponding storage address divided for microservice 1 is A and the corresponding storage address divided for microservice 2 is B. It should be noted that the corresponding relationships between the storage attribute information and the storage address created by different clients may be the same or different. For example, the client S1 creates a corresponding relationship based on the name of the microservice, the client S2 creates a corresponding relationship based on the host name of the host in which the microservice is located, and the client S2 may also create a corresponding relationship based on the name of the microservice and the host name of the host in which the microservice is located together.

It should be understood that because the routing field region can only be used for determining to which storage address the target log is stored, and the user may also need to query the target log after the target log is stored into the server, in some implementations, it is also possible to determine, for each of the sub-logs in the target log, the log attribute information of the sub-log, and store the log attribute information of the sub-log into the corresponding index field, so that the client may query the log content of the corresponding sub-log based on the log attribute information.

In the embodiment of the present disclosure, because each sub-log has corresponding log attribute information, and the log attribute information of each sub-log is stored into the corresponding index field, so that when querying, index fields in the index field region may be traversed, and there is no need to query the log content. In this way, the scope of querying may be reduced and accordingly the query efficiency may be improved.

Here, because the sub-logs are independent of each other, each of the sub-logs has corresponding attribute information. The attribute information may include information such as a time stamp, a log ID, and the like; and the attribute information may be in the form of a key-value pair, e.g., the attribute information of the sub-log 1 is Timestamp: 2023-08-14 14:00:00 or LogID: 1234; the attribute information of the sub-log 2 is Timestamp: 2023-08-14 14:01 :00 or LogID: 1237.

Specifically, the server may receive a log query request sent by any client, the log query request carries log information to be queried, and then determine, based on the log information to be queried, a target log content corresponding to the log information to be queried, and send the target log content to the client.

In the embodiment of the present disclosure, after receiving the log query request from the client, the server may search, based on the log query request, the target log content corresponding to the log information to be queried, and return the target log content to the client, thereby implementing the query of the log content, and the user can intuitively view the target log content through the client.

The log information to be queried carried by the log query request may refer to the log information that the client needs to query, for example, it may be a time stamp, and a log ID.

It can be understood that the client may respond to a query operation of the user, to input a log query request through the client and send the log query request to the server, so that the server, after receiving the log query request from the client, may determine the target log content corresponding to the log information to be queried based on the log information to be queried in the log query request. Here, because the log information to be queried inputted from different clients is different, the contents of the determined target log contents may also be different, and accordingly the target log content may be sent to the client after the target log content is determined.

In some implementations, because the log information to be queried may include log attribute information to be queried, the action of querying, based on the log information to be queried, a target log content corresponding to the log information to be queried may include searching, based on the log attribute information to be queried, target log attribute information matched with the log attribute information to be queried, from the index field region, and searching, based on the target log attribute information, the target log content associated with the target log attribute information from a region corresponding to the storage address.

Here, the log attribute information of the target log is pre-associated with the storage address.

It can be understood that after the log attribute information of each sub-log is stored into the index field in the index field region, the user may query the log content of any sub-log based on the log attribute information to be queried. The log attribute information to be queried may be one of the log attribute information of the plurality of sub-logs or may not be included in the log attribute information of the plurality of sub-logs. Here, if the log attribute information to be queried is not included in the log attribute information of the plurality of sub-logs, the server returns a null value, for example, the user may input a query statement (query expression) or query condition for the time stamp Timestamp, so that the server returns the corresponding log content according to the input query statement or query condition. That is, the log information to be queried can improve the log query speed and efficiency and reduce the consuming time for query.

In some other embodiments, the log information to be queried may further include log content information to be queried, and accordingly, the action of querying, based on the log information to be queried, a target log content corresponding to the log information to be queried may also include searching, based on the log content information to be queried, the target log content matched with the log content information to be queried from a region corresponding to the storage address, and sending the target log content to the client.

Similar to the foregoing embodiments, the user may also directly query the log content. Specifically, the user may input the log content information to be queried at the client to generate a log query request and send the log query request to the server, and then the server will determine the target log to be queried based on the log content information to be queried carried in the log query request, decode all log contents of the target log and traverse them to obtain the target log content matched with the log content information to be queried, and return the target log content to the client.

Here, the action of searching, based on the log content information to be queried, the target log content matched with the log content information to be queried from a region corresponding to the storage address may include decoding the target log in the memory to obtain a plurality of raw sub-logs respectively corresponding to the plurality of sub-logs, each raw sub-log of the plurality of raw sub-logs comprising a plurality of log contents; determining, for each log content of the plurality of log contents of each raw sub-log, a pointer of each log content in a memory; and determining, based on the log content corresponding to each pointer, a target pointer matched with the log content information to be queried, and searching the target log content from a storage address indicated by the target pointer.

In the embodiment of the present disclosure, the server may search the target log content according to the above two ways, thereby increasing the diversity of the log content searching method and improving the log search experience for the user. In addition, by matching the log attribute information to be queried with the target log attribute information stored in the index field region, index search may be achieved, and accordingly the search efficiency may be improved. By searching the target log content based on the log content information to be queried, the accuracy of searching the log content may be improved.

Here, the process of decoding the target log is implemented in the memory, so that after the log content of the raw sub-log corresponding to each sub-log is obtained, the log content is stored in the memory space, and for each of the log contents, the pointer of the log content in the memory is determined. In this way, based on the log contents corresponding to the respective pointers, the target pointer matched with the log content information to be queried can be determined, and corresponding target log content is searched from the storage address indicated by the target pointer. However, in the encoding rule of the PB transfer protocol, the fields of the string type are coded in the form of bytes. When parsing the byte data and converting it to the string type, the PB transfer protocol will parse the byte data by copying the byte data into a new String object. In the process of parsing a large number of strings frequently, it is necessary to create a new String object each time, which may cause gaps in the memory and gradually increase memory fragmentation. On the other hand, this copying operation may affect parsing performance, and for a large number of string copying operations, especially in the process of parsing a large number of strings frequently, the operation of copying the whole string involves the allocation of memory, copying of data, and the associated memory management overhead, therefore, this implementation may improve the efficiency of decoding as compared with the PB transfer protocol.

In the embodiment of the present disclosure, because a decoding process of the target log is completed in the memory, after the log content of each raw sub-log is obtained by decoding, the log content will be stored in the memory, and at the same time, a pointer in the memory for the log content will be generated, so that the corresponding target log content is searched based on the pointer, which is conducive to saving the memory space and at the same time can also reduce the decoding overhead as compared with a solution in which the PB transfer protocol needs to copy respective log contents (in the form of a byte) into string objects for parsing.

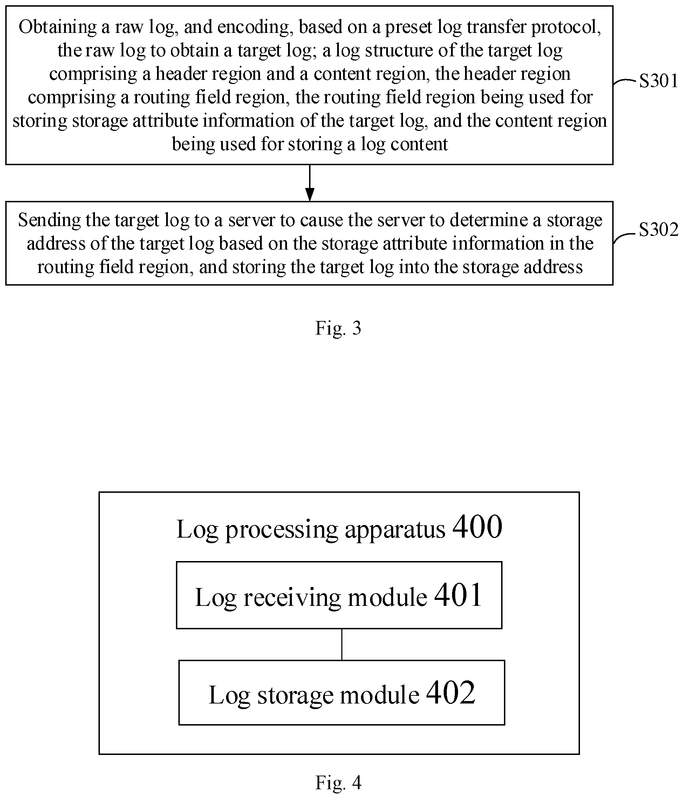

Fig. 3 is a flowchart of another log processing method according to an embodiment of the present disclosure. The log processing method is applied to the client, and the client runs with at least one microservice. The client may run on a terminal device, and the terminal device may be a mobile device, a user terminal, a terminal, a handheld device, a computing device, an in-vehicle device, a wearable device, and the like, which is not limited herein.

In the embodiment of the present disclosure, because the log structure of the target log includes the routing field region and the content region, the routing field region is used for storing storage attribute information of the log, and the content region is used for storing the log contents, so that the client may encode the raw log based on the log transfer protocol to obtain the target log and send the target log to the server. In this way, after receiving the target log, the server may decode the routing field region to determine the storage address corresponding to the target log. Compared with a method of transferring via the PB transfer protocol, the service does not need to decode the entire contents of the target log to obtain the storage address of the target log, and accordingly, it is favorable to reducing the overhead occupied in the process of obtaining the storage address. In addition, because the space occupied by the routing field region is small, the efficiency of obtaining the storage address may also be improved.

As shown in Fig. 3, the log processing method includes steps S301-S302 as below.

S301: obtaining a raw log, and encoding, based on a preset log transfer protocol, the raw log to obtain a target log; a log structure of the target log comprising a header region and a content region, the header region comprising a routing field region, the routing field region being used for storing storage attribute information of the target log, and the content region being used for storing a log content.

Here, the raw log may refer to a log generated through the invocation of a microservice that is run on the client by an application program, and the raw log includes a plurality of raw sub-logs.

It should be understood that after the client generates the raw log, the raw log may be encoded based on the preset log transfer protocol to obtain the target log. Here, the relevant description of the preset log transfer protocol and the target log has already been described in the aforementioned embodiment, and will not be repeated herein.

For example, when encoding the raw log, the raw log may be encoded in different modes including a High-Level mode and a Low-level mode. In the High-Level mode, respective key-value pairs are added by means of a predefined interface and a Serialize interface is called to serialize the respective key-value pairs into a contiguous memory. In the Low-level mode, the key-value pairs are appended to a buffer and a Finish interface is called finally to fill in the protocol header information, thereby completing the log encoding.

S302: sending the target log to a server to cause the server to determine a storage address of the target log based on the storage attribute information in the routing field region, and storing the target log into the storage address.

It can be understood that after the encoded target log is obtained, the target log may be sent to the server for storage, so that the target log may be managed in a unified manner. Here, for the storage process in which the server stores the target log, reference may be made to the contents described in the forgoing embodiments, and will not be repeated herein.

In some implementations, because the raw log includes the plurality of raw sub-logs, each of the plurality of raw sub-log includes a plurality of key-value pairs, and the plurality of raw sub-logs usually include many repeated keywords, such as the keyword "message" and the keyword "timestamp", etc., during encoding, these identical keywords will be encoded many times, which needs to occupy a lot of overhead. Based on this, in this implementation, the action of encoding the raw log based on the preset log transfer protocol to obtain the target log includes: determining, for the plurality of raw sub-logs, at least one identical raw keyword present in the plurality of raw sub-logs; and for each identical raw keyword, replacing the raw keyword with a target keyword to obtain a plurality of new raw sub-logs, and encoding the plurality of new raw sub-logs, a byte length of the target keyword being less than a byte length of the identical raw keyword.

In the embodiments of the present disclosure, by replacing each identical raw keyword in the respective raw sub-logs with the target keyword with a smaller byte length, the storage space of the raw log may be reduced to achieve the purpose of log compression, which is conducive to improving the coding efficiency. In addition, the transfer bandwidth may be saved in the transfer process of the target log in subsequent steps.

For each identical raw keyword, the target keyword corresponding thereto is unique, and the target keyword may be in the form of English or may be numeric, which is not limited herein.

Illustratively, the keyword "message" with a byte length of 7 may be replaced with the target keyword "a", and it can be seen that the byte length of "a" is 1. For another example, the keyword "LogID" may be replaced with the target keyword "b", such that the byte length changes from 5 to 1. In this way, the storage space occupied by the raw log may be reduced, and the overhead and bandwidth used in the encoding process may also be reduced.

Here, the header region of the transfer protocol includes a field Pattern, which can store the dictionaryized raw keyword and the target keyword, so that the dictionaryization of the keyword may be achieved.

For example, after the target log is stored to the server, the user may query the target log stored by the server based on the client. Specifically, a log query request may be generated in response to a query operation, the log query request carries the log information to be queried, and the client may send the log query request to the server. The log query request carries the log information to be queried, so that the server may search a log content corresponding to the log information to be queried based on the log information to be queried.

In the embodiments of the present disclosure, the client may send the log query request to the server, so that the target log content corresponding to the log information to be queried carried by the log query request may be obtained from the server, so that the user can view the target log content, thereby facilitating the problem targeting and handling.

Here, because the log attribute information is stored in the index field in the protocol structure of the log transfer protocol in the present disclosure, and the log content information is stored in the content region, the log information to be queried may include log attribute information to be queried or log content information to be queried. So that the user may perform a log query based on the log attribute information to be queried or the log content information to be queried, thereby enhancing the diversity of query methods.

Illustratively, a query is performed with the log attribute information to be queried LogID, and the corresponding query statement may be of the following form:
select * from table _name
where LogID='123456'
limit 1000;

Based on the above query statement, it is possible to find contents of logs with LogID of "123456" in the first 1000 logs.

A person skilled in the art can understand that, in the specific implementation of the above-mentioned methods, the order in which the steps are described does not imply a strict order of execution and does not constitute any limitation of the implementation process, and the specific execution order of the steps should be determined by its function and possible internal logic.

Based on the same technical concept, an embodiment of the present disclosure further provides a log processing apparatus corresponding to the log processing method. Because the principle of solving the problems by the apparatus in the embodiment of the present disclosure is similar to that of the above-mentioned log processing method in the embodiment of the present disclosure, the implementation of the apparatus may refer to the implementation of the method, and repeated descriptions are omitted.

Fig. 4 is a schematic diagram of a log processing apparatus according to an embodiment of the present disclosure. The apparatus 400 includes:
a log receiving module 401, configured to receive a target log sent from a client, where the target log is obtained by encoding a raw log with a preset field type through the client based on a preset log transfer protocol, a log structure of the target log includes a header region and a content region, the header region includes a routing field region, the routing field region is used for storing storage attribute information of the target log, and the content region is used for storing a log content; and
a log storage module 402, configured to decode, based on the preset log transfer protocol, the routing field region to obtain the storage attribute information of the target log, determine, based on the storage attribute information of the target log, a storage address of the target log, and store the target log into the storage address.

In a possible implementation, the log storage module 402 is specifically configured to:
search, based on the storage attribute information of the target log, a target storage address corresponding to the storage attribute information of the target log from a pre-constructed corresponding relationship between storage attribute information and storage address, and determine the target storage address as the storage address of the target log, where the target log is a log generated when a target microservice run by the client is invoked, and the storage attribute information includes at least one selected from a group comprising a name of a microservice, a host name corresponding to the microservice, and a host network address corresponding to the microservice.

In a possible implementation, the header region of the log transfer protocol further includes an index field region, the index field region includes a plurality of index fields; the target log includes a plurality of sub-logs, each of the plurality of sub-logs corresponds to at least one index field of the plurality of index fields; and the log storage module 402 is further configured to:
determine, for each sub-log of the plurality of sub-logs, log attribute information of the sub-log, and store the log attribute information of the sub-log into a corresponding index field, the log attribute information being used for querying a corresponding sub-log.

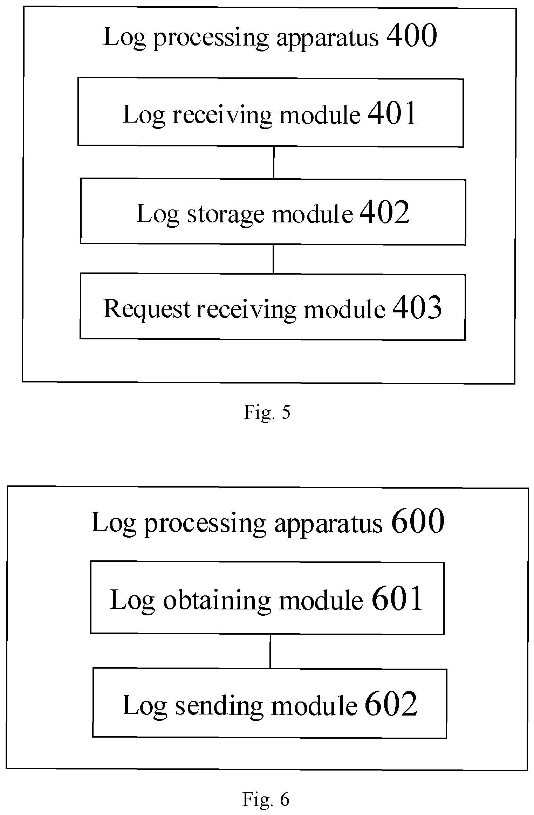

Fig. 5 is a schematic diagram of another log processing apparatus according to an embodiment of the present disclosure. The apparatus 400 further includes a request receiving module 403 configured to:
receive a log query request sent from the client, the log query request carrying log information to be queried; and
search, based on the log information to be queried, a target log content corresponding to the log information to be queried, and send the target log content to the client.

In a possible implementation, the log information to be queried includes log attribute information to be queried or log content information to be queried; the header region further includes an index field region, the index field region includes a plurality of index fields, and the plurality of index fields are used for storing the log attribute information; the request receiving module 403 is specifically configured to:
search, based on the log attribute information to be queried, target log attribute information matched with the log attribute information to be queried, from the index field region, and search, based on the target log attribute information, the target log content associated with the target log attribute information from a region corresponding to the storage address; or
search, based on the log content information to be queried, the target log content matched with the log content information to be queried from a region corresponding to the storage address.

In a possible implementation, the target log includes a plurality of sub-logs; and the request receiving module 403 is specifically configured to:
decode the target log to obtain a plurality of raw sub-logs respectively corresponding to the plurality of sub-logs, each raw sub-log including a plurality of log contents;
determine, for each log content of the plurality of log contents of each raw sub-log, a pointer of each log content in a memory; and
determine, based on the log content corresponding to each pointer, a target pointer matched with the log content information to be queried, and search the target log content from a storage address indicated by the target pointer.

In a possible implementation, the log structure of the target log further includes a protocol header, the protocol header is used for storing protocol information, and the protocol information includes at least one selected from a group comprising a version number of the preset log transfer protocol, a log compression algorithm type, a log length, and protocol verification information. The version number of the preset log transfer protocol is used for indicating a version of a log transfer protocol that is used for generating the target log; the log compression algorithm type refers to a compression algorithm used for compressing the raw log; the log length is used for indicating a maximum amount of data of a log to be encoded; and the protocol verification information is used for verifying whether there is an error in the target log relative to the raw log.

Fig. 6 is a schematic diagram of yet another log processing apparatus according to an embodiment of the present disclosure. The apparatus 600 includes:
a log obtaining module 601, configured to obtain a raw log, and encode, based on a preset log transfer protocol, the raw log to obtain a target log; a log structure of the target log including a header region and a content region, the header region including a routing field region, the routing field region is used for storing storage attribute information of the target log, and the content region being used for storing a log content; and
a log sending module 602, configured to send the target log to a server to cause the server to determine a storage address of the target log based on the storage attribute information in the routing field region, and store the target log into the storage address.

In a possible implementation, the raw log includes a plurality of raw sub-logs, each raw sub-log includes a plurality of key-value pairs, each key-value pair includes a keyword and a key-value; and the log obtaining module 601 is specifically configured to:
determine, for the plurality of raw sub-logs, at least one identical raw keyword present in the plurality of raw sub-logs; and
for each identical raw keyword, replace the raw keyword with a target keyword to obtain a plurality of new raw sub-logs, and encode the plurality of new raw sub-logs, a byte length of the target keyword being less than a byte length of the raw keyword.

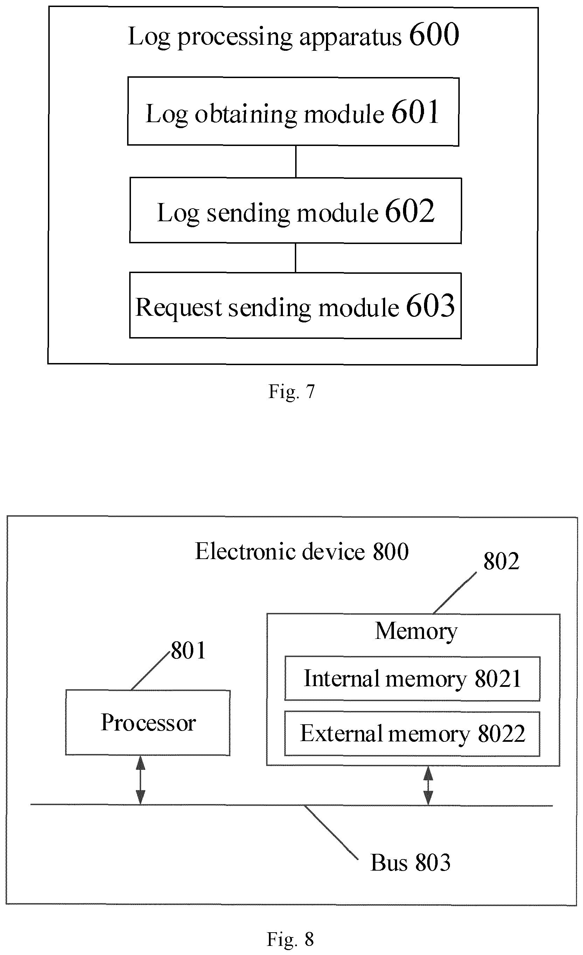

Fig. 7 is a schematic diagram of still another log processing apparatus according to an embodiment of the present disclosure. The apparatus 600 further includes a request sending module 603 specifically configured to:
generate a log query request in response to a query operation; the log query request carrying log information to be queried;
send the log query request to the server, the log query request being used for searching a target log content corresponding to the log information to be queried; and
receive the target log content, corresponding to the log information to be queried, sent from the server.

For the descriptions of processing flows of the modules and the interaction flows among the modules in the apparatus, reference may be made to the relevant descriptions in the above-mentioned method embodiments, and will not be described in detail herein.

Based on the same technical concept, an embodiment of the present disclosure further provides an electric device. Referring to Fig. 8, a schematic structural diagram of an electronic device 800 according to an embodiment of the present disclosure is shown, the electronic device 800 includes a processor 801, a memory 802, and a bus 803. The memory 802 is used for storing executable instructions and includes an internal memory 8021 and an external memory 8022. The internal memory 8021 herein, also referred to as an internal storage, is used for temporarily storing the computing data in the processor 801, as well as data exchanged with the external memory 8022, such as a hard disk. The processor 801 exchanges data with the external memory 8022 through the internal memory 8021.

In the embodiment of the present disclosure, the memory 802 is specifically configured to store application program code used to execute the solution of the present disclosure, and the application program code is executed under control of the processor 801. When the electronic device 800 runs, the processor 801 is in communication with the memory 802 via the bus 803 such that the processor 801 executes the application program code stored in the memory 802, so as to perform the method in any of the foregoing embodiments.

The memory 802 may be, but is not limited to, a Random Access Memory (RAM), a Read Only Memory (ROM), a Programmable Read-Only Memory (PROM), an Erasable Programmable Read-Only Memory (EPROM), an Electric Erasable Programmable Read-Only Memory (EEPROM), and the like.

The processor 801 may be an integrated circuit chip having a signal processing capability. The processor may be a general-purpose processor, including a Central Processing Unit (CPU), a Network Processor (NP), or the like, and the processor may also be a Digital Signal Processor (DSP), an Application Specific Integrated Circuit (ASIC), a Field-Programmable Gate Array (FPGA), or other programmable logic devices, discrete gates or transistor logic device, or discrete hardware components. The processor may implement or perform the methods, the steps, and logical block diagrams that are disclosed in the embodiments of the present disclosure. The general-purpose processor may be a microprocessor, or the processor may also be any conventional processor or the like.

It can be understood that the structures illustrated in the embodiments of the present disclosure do not constitute a specific limitation to the electronic device 800. In some other embodiments of the present disclosure, the electronic device 800 may include more or fewer components than that illustrated in the drawings, or a combination of some components, or a splitting of some components, or a different arrangement of components. The illustrated components may be implemented in hardware, software, or a combination of software and hardware.

An embodiment of the present disclosure further provides a non-transitory computer-readable storage medium, the non-transitory computer-readable storage medium stores a computer program. When the computer program is run by a processor, the steps of the log processing method described in the above-mentioned method embodiments are performed. The storage medium may be a volatile or non-volatile computer-readable storage medium.

An embodiment of the present disclosure further provides a computer program product, and the computer program product carries program codes. The program codes include instructions, when the instructions are executed, the steps of the log processing method described in the above-mentioned method embodiments may be performed, for details, reference may be made to the above-mentioned method embodiments, and will not be repeated herein.

The above-mentioned computer program product may be implemented specifically by means of hardware, software, or a combination thereof. In one optional embodiment, the computer program product is specifically embodied as a computer storage medium, and in another optional embodiment, the computer program product is specifically embodied as a software product, such as an SDK (Software Development Kit), etc.

It may be clearly understood by a person skilled in the art that, for the purpose of convenience and brevity of the description, for a detailed working process of the above-described system and apparatus, reference may be made to a corresponding process in the above-described method embodiments, and details are not described again herein. In the several embodiments provided in the present disclosure, it should be understood that the disclosed system, apparatus, and method may be implemented in other manners. The above-described embodiments of the apparatus are merely schematic. For example, the division of the described units is merely logical function division, and other division may be used in actual implementation. For example, a plurality of units or components may be combined or integrated into another system, or some features may be ignored or may not be performed. In addition, the displayed or discussed mutual couplings or direct couplings or communication connections may be implemented by using some communication interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of the embodiments.

In addition, functional units in the embodiments of the present disclosure may be integrated into one processing unit, or each of the units may exist alone physically, or two or more units are integrated into one unit.

When the functions are implemented in a form of a software functional unit and sold or used as an independent product, the functions may be stored in a non-volatile computer-readable storage medium executable by the processor. Based on such an understanding, the technical solutions of the present disclosure essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present disclosure. The aforementioned storage medium includes: any medium capable of storing program code, such as a USB flash drive, a removable hard disk, a read-only memory, a random access memory, a magnetic disk, or an optical disk.

Finally, it should be noted that the above described embodiments are only specific embodiments of the present disclosure to illustrate the technical solutions of the present disclosure, not used to limit them, and the scope of protection of the present disclosure is not limited thereto. Although the present disclosure has been described in detail with reference to the foregoing embodiments, a person of ordinary skill in the art should understand that any person of skill in the art who is familiar with the technical field may, within the technical scope disclosed in the present disclosure, still be able to make modifications or conceivable variations that can be easily think of to the technical solutions described in the foregoing embodiments, or make equivalent substitutions for some of the technical features therein; and these modifications, changes, or substitutions, which do not take the essence of the corresponding technical solutions out of the spirit and scope of the technical solutions of the embodiments of the present disclosure, shall be covered within the scope of protection of the present disclosure. Therefore, the scope of protection of the present disclosure shall be based on the scope of protection of the claims.

## Claims

1. A log processing method, comprising:
receiving a target log sent from a client, wherein the target log is obtained by encoding a raw log with a preset field type through the client based on a preset log transfer protocol, a log structure of the target log comprises a header region and a content region, the header region comprises a routing field region, the routing field region is used for storing storage attribute information of the target log, and the content region is used for storing a log content; and
decoding, based on the preset log transfer protocol, the routing field region to obtain the storage attribute information of the target log, determining, based on the storage attribute information of the target log, a storage address of the target log, and storing the target log into the storage address.

2. The method according to claim 1, wherein the determining, based on the storage attribute information of the target log, a storage address of the target log, comprises:
searching, based on the storage attribute information of the target log, a target storage address corresponding to the storage attribute information of the target log from a pre-constructed corresponding relationship between storage attribute information and storage address, and determining the target storage address as the storage address of the target log, wherein the target log is a log generated when a target microservice run by the client is invoked, and the storage attribute information comprises at least one selected from a group comprising a name of a microservice, a host name corresponding to the microservice, and a host network address corresponding to the microservice.

3. The method according to claim 1 or 2, wherein the header region further comprises an index field region, the index field region comprises a plurality of index fields; the target log comprises a plurality of sub-logs, and each sub-log of the plurality of sub-logs corresponds to at least one index field of the plurality of index fields; and the method further comprises:
determining, for each sub-log of the plurality of sub-logs, log attribute information of the sub-log, and storing the log attribute information of the sub-log into a corresponding index field, wherein the log attribute information is used for querying a corresponding sub-log.

4. The method according to any one of claims 1-3, wherein after the determining, based on the storage attribute information of the target log, a storage address of the target log, and storing the target log into the storage address, the method further comprises:
receiving a log query request sent from the client, wherein the log query request carries log information to be queried; and
searching, based on the log information to be queried, a target log content corresponding to the log information to be queried, and sending the target log content to the client.

5. The method according to claim 4, wherein the log information to be queried comprises log attribute information to be queried or log content information to be queried; the header region further comprises an index field region, the index field region comprises a plurality of index fields, and the plurality of index fields are used for storing log attribute information; and the searching, based on the log information to be queried, a target log content corresponding to the log information to be queried, comprises:
searching, based on the log attribute information to be queried, target log attribute information matched with the log attribute information to be queried, from the index field region, and searching, based on the target log attribute information, the target log content associated with the target log attribute information from a region corresponding to the storage address; or
searching, based on the log content information to be queried, the target log content matched with the log content information to be queried from a region corresponding to the storage address.

6. The method according to claim 5, wherein the target log comprises a plurality of sub-logs; and the searching, based on the log content information to be queried, the target log content matched with the log content information to be queried from a region corresponding to the storage address, comprises:
decoding the target log to obtain a plurality of raw sub-logs respectively corresponding to the plurality of sub-logs, wherein each raw sub-log of the plurality of raw sub-logs comprises a plurality of log contents;
determining, for each log content of the plurality of log contents of each raw sub-log, a pointer of each log content in a memory; and
determining, based on the log content corresponding to each pointer, a target pointer matched with the log content information to be queried, and searching the target log content from a storage address indicated by the target pointer.

7. The method according to any one of claims 1-6, wherein the log structure of the target log further comprises a protocol header, the protocol header is used for storing protocol information, and the protocol information comprises at least one selected from a group comprising a version number of the preset log transfer protocol, a log compression algorithm type, a log length, and protocol verification information, the version number of the preset log transfer protocol is used for characterizing a version of a log transfer protocol that is used for generating the target log; the log compression algorithm type refers to a compression algorithm for compressing the raw log; the log length is used for indicating a maximum amount of data of a log to be encoded; and the protocol verification information is used for verifying whether there is an error in the target log relative to the raw log.

8. A log processing method, comprising:
obtaining a raw log, and encoding, based on a preset log transfer protocol, the raw log to obtain a target log; wherein a log structure of the target log comprises a header region and a content region, the header region comprises a routing field region, the routing field region is used for storing storage attribute information of the target log, and the content region is used for storing a log content; and
sending the target log to a server to cause the server to determine a storage address of the target log based on the storage attribute information in the routing field region, and storing the target log into the storage address.

9. The method according to claim 8, wherein the raw log comprises a plurality of raw sub-logs, each raw sub-log comprises a plurality of key-value pairs, and each key-value pair comprises a keyword and a key-value; and the encoding, based on a preset log transfer protocol, the raw log to obtain a target log, comprises:
determining, for the plurality of raw sub-logs, at least one identical raw keyword present in the plurality of raw sub-logs; and
for each identical raw keyword, replacing the raw keyword with a target keyword to obtain a plurality of new raw sub-logs, and encoding the plurality of new raw sub-logs, wherein a byte length of the target keyword is less than a byte length of the raw keyword.

10. The method according to claim 8 or 9, further comprising:
generating a log query request in response to a query operation, wherein the log query request carries log information to be queried;
sending the log query request to the server, wherein the log query request is used for searching a target log content corresponding to the log information to be queried; and
receiving the target log content, corresponding to the log information to be queried, sent from the server.

11. A log processing apparatus (400), comprising:
a log receiving module (401), configured to receive a target log sent from a client, wherein the target log is obtained by encoding a raw log with a preset field type through the client based on a preset log transfer protocol, a log structure of the target log comprises a header region and a content region, the header region comprises a routing field region, the routing field region is used for storing storage attribute information of the target log, and the content region is used for storing a log content; and
a log storage module (402), configured to decode, based on the preset log transfer protocol, the routing field region to obtain the storage attribute information of the target log, determine, based on the storage attribute information of the target log, a storage address of the target log, and store the target log into the storage address.

12. A log processing apparatus (600), comprising:
a log obtaining module (601), configured to obtain a raw log, and encode, based on a preset log transfer protocol, the raw log to obtain a target log; wherein a log structure of the target log comprises a header region and a content region, the header region comprises a routing field region, the routing field region is used for storing storage attribute information of the target log, and the content region is used for storing a log content; and
a log sending module (602), configured to send the target log to a server to cause the server to determine a storage address of the target log based on the storage attribute information in the routing field region, and store the target log into the storage address.

13. An electronic device (800), comprising a processor (801), a memory (802), and a bus (803),
wherein the memory (802) stores machine-readable instructions executable by the processor (801), when the electronic device (800) runs, the processor (801) is in communication with the memory (802) via the bus (803), and when the machine-readable instructions are executed by the processor (801), steps of the log processing method according to any one of claims 1-7 or 8-10 are performed.

14. A non-transitory computer-readable storage medium, wherein the non-transitory computer-readable storage medium stores a computer program, and when the computer program is executed by a processor, steps of the log processing method according to any one of claims 1-7 or 8-10 are performed.
